# EUROPÄISCHE PATENTANMELDUNG

(11) **EP 3 795 303 A1**
(43) Veröffentlichungstag der Anmeldung: **24.03.2021**
(21) Anmeldenummer: 19198427.7
(22) Anmeldetag: 19.09.2019
(51) Int. Cl.: B25F 5/02, B27B 17/00, B23D 57/02, B23D 45/16

(54) **HANDGEFÜHRTES ARBEITSGERÄT**

(71) Anmelder: Andreas Stihl AG & Co. KG, 71336 Waiblingen (DE)
(72) Erfinder: Kranzinger, Patrick, 71336 Waiblingen (DE)
(74) Vertreter: Reinhardt, Annette

(57) **Zusammenfassung**

Ein handgeführtes Arbeitsgerät (1) weist ein Werkzeug (7) auf. Das Arbeitsgerät (1) besitzt eine Abstellposition (11), in der das Arbeitsgerät (1) auf einer ebenen, horizontalen Abstellfläche (12) abgestellt ist. Das Arbeitsgerät (1) weist eine Längsrichtung (15) auf, die parallel zur Ebene (16) des Werkzeugs (7) und in Abstellposition (11) parallel zur Abstellfläche (12) verläuft. Das Arbeitsgerät (1) weist ein Gehäuse (2) auf, und das Werkzeug (7) verläuft mindestens teilweise außerhalb des Gehäuses (2). An der Unterseite (13) des Arbeitsgeräts (1) verläuft mindestens eine Führungsrippe (17), deren Längsrichtung (20) mit der Längsrichtung (15) des Arbeitsgeräts (1) einen Winkel (α) von weniger als 10° einschließt. Die Führungsrippe (17) weist zwei Seitenwände (18) auf, zwischen denen eine Stirnseite (19) der Führungsrippe (17) verläuft. Die Seitenwände (18) verlaufen in mindestens einem Abschnitt in einem Winkel (β) zueinander geneigt, der in einer Schnittebene senkrecht zur Längsrichtung (15) des Arbeitsgeräts (1) mindestens 10° beträgt.

## Beschreibung

Die Erfindung betrifft ein handgeführtes Arbeitsgerät der im Oberbegriff des Anspruchs 1 angegebenen Gattung.

Aus der US 2009/0145271 A1 ist ein handgeführtes Arbeitsgerät, nämlich eine Motorsäge bekannt. Das Griffgehäuse der Motorsäge ist aus zwei Halbschalen zusammengesetzt, die an einer in Längsrichtung der Motorsäge verlaufenden Trennebene miteinander verbunden sind. Parallel zur Schweißnaht verlaufen am Boden der Motorsäge Rippen, die hinter der Anbindung des Griffrohrs beginnen. Beim Abstellen der Motorsäge steht diese auf dem vorderen, unteren Ende des Griffrohrs und im hinteren Bereich des hinteren Handgriffs auf.

Der Erfindung liegt die Aufgabe zugrunde, ein handgeführtes Arbeitsgerät der gattungsgemäßen Art zu schaffen, das verbesserte Eigenschaften beim Führen des Arbeitsgeräts im Betrieb und eine verringerte Verschmutzungsneigung aufweist.

Diese Aufgabe wird durch ein handgeführtes Arbeitsgerät mit den Merkmalen des Anspruchs 1 gelöst.

Es ist vorgesehen, dass die Führungsrippe zwei Seitenwände aufweist, zwischen denen eine Stirnseite der Führungsrippe verläuft. Es ist vorgesehen, dass die Seitenwände in mindestens einem Abschnitt in einem Winkel zueinander geneigt verlaufen, der in einer Schnittebene senkrecht zur Längsrichtung des Arbeitsgeräts mindestens 10° beträgt.

Bei gekrümmtem Verlauf der Seitenwände ist der Winkel zwischen Tangenten der Seitenwände zu messen, wobei der Winkel in mindestens einem Höhenabschnitt der Seitenwände mindestens 10° beträgt. Vorteilhaft schließen die Seitenwände in keinem Höhenabschnitt einen Winkel von weniger als 10° ein. Bevorzugt schließen die Seitenwände in jedem Schnitt durch die Führungsrippe senkrecht zur Längsrichtung in mindestens einem Bereich, bevorzugt in jedem Bereich, einen Winkel von mindestens 10° ein.

Dadurch, dass die Seitenwände der mindestens einen Führungsrippe in einer Schnittebene senkrecht zur Längsrichtung nicht parallel zueinander, sondern in einem Winkel von mindestens 10° zueinander geneigt verlaufen, kann das Arbeitsgerät auch quer zur Längsrichtung über die mindestens eine Führungsrippe geschoben werden. Hierbei muss das Arbeitsgerät nicht vom Untergrund abgehoben werden, sondern es genügt, eine seitliche Kraft auf das Arbeitsgerät auszuüben. Durch diese seitliche Kraft kann der vergleichsweise geringe Widerstand, den die Führungsrippe einer Bewegung des Arbeitsgeräts quer zur Längsrichtung entgegensetzt, überwunden werden. Dadurch wird ein vielseitiges Arbeiten mit dem Arbeitsgerät ermöglicht. Die erforderliche Kraft ist dabei abhängig vom Winkel zwischen den Seitenwänden. Durch geeignete Wahl dieses Winkels ist eine Abstimmung der sich ergebenden Seitenführung auf das Anwendungsgebiet möglich. Der Winkel zwischen den Seitenwänden begünstigt außerdem das Ausschieben von Verschmutzungen aus dem zwischen benachbarten Führungsrippen gebildeten Bereich.

Unter einer Führungsrippe wird vorliegend eine schmale, lange Struktur verstanden. Die in Längsrichtung der Führungsrichtung gemessene Länge der Führungsrippe ist um ein Vielfaches größer als die senkrecht zur Längsrichtung und parallel zur Abstellfläche gemessene Breite der Führungsrippe. Noppen oder dergleichen, deren Länge nur unwesentlich von ihrer Breite abweicht, bilden keine Führungsrippen im Sinne der vorliegenden Anmeldung.

Durch die längliche Gestalt der Führungsrippe und die Ausrichtung der Führungsrippe wird eine verbesserte Führung in Längsrichtung des Arbeitsgerätes und eine Erhöhung des Seitenhalts in Querrichtung der Führungsrippe bzw. des Arbeitsgerätes erreicht. Das Arbeitsgerät lässt sich demnach leicht längs verschieben und weist gegenüber einer Verschiebung in Querrichtung einen Widerstand auf. Ein seitliches Verrutschen des Arbeitsgerätes wird durch die Führungsrippe erschwert, wodurch das Bewegen des Arbeitsgerätes in Längsrichtung vereinfacht wird.

In bevorzugter Gestaltung beträgt der Winkel zwischen den Seitenwänden einer Führungsrippe mindestens 30°.

Um eine seitliche Bewegung des Arbeitsgeräts zu unterstützen, ist vorzugsweise vorgesehen, dass die Stirnseite der Führungsrippe in einer Schnittebene senkrecht zur Längsrichtung des Arbeitsgeräts konvex gerundet verläuft. Durch diese Formgebung der Stirnseite der Führungsrippe kann zum einen eine gute Führung in Längsrichtung des Arbeitsgeräts ermöglicht werden, und gleichzeitig wird bei einer seitlichen Verschiebung des Arbeitsgeräts die Neigung zum Verhaken am Werkstück oder am Untergrund reduziert. In vorteilhafter Gestaltung ist mindestens eine Seitenwand der Führungsrippe zumindest in einem Abschnitt konkav gekrümmt. Die konkave Krümmung ist dabei vorzugsweise in einer Schnittebene senkrecht zur Längsrichtung des Arbeitsgeräts vorgesehen. Die konvexe oder konkave Krümmung kann dabei durch einen durchgehenden Radius, mehrere aneinander gereihte Radien, eine elliptische Form oder auf andere Weise gebildet sein.

Das Gehäuse weist eine in Längsrichtung gemessene Länge auf. In dem Gehäuse können beispielsweise ein Antriebsmotor, ein oder mehrere Betriebsmitteltanks, ein Akku oder dgl. angeordnet sein. Handgriffe oder dgl. werden nicht als Teil des Gehäuses betrachtet, auch wenn sie mit Teilen des Gehäuses einteilig ausgebildet sein können. Das Werkzeug verläuft mindestens teilweise außerhalb des Gehäuses. Das Gehäuse weist vorteilhaft eine Vorderseite auf, die dem außerhalb des Gehäuses verlaufenden Abschnitt des Werkzeugs zugewandt ist. Es ist ein mittlerer Längsabschnitt vorgesehen, der eine Länge aufweist, die mindestens 15% der Länge des Gehäuses des Arbeitsgeräts beträgt. In jedem Teillängsabschnitt des mittleren Längsabschnitts, der eine Länge von mindestens 2 cm besitzt, weist dieser Längsabschnitt mindestens einen Abschnitt einer Führungsrippe auf. In dem Längsabschnitt ist demnach kein führungsrippenfreier Bereich mit einer Länge von 2 cm oder mehr vorhanden.

Durch den vergleichsweise langen mittleren Längsabschnitt, in dem höchstens Teillängsabschnitte von weniger als 2 cm Länge ohne Führungsrippe vorhanden sind, kann das Arbeitsgerät gut über eine Auflagefläche geführt werden. Bei einer Motorsäge ist die Auflagefläche insbesondere die Rinde eines Baumes. Dadurch, dass jeder Teillängsabschnitt mit einer Länge von mindestens 2 cm zumindest einen Abschnitt einer Führungsrippe aufweist, kann weitgehend verhindert werden, dass sich Rinde eines Baums an der Unterseite des Arbeitsgeräts verhaken kann. Es wird eine gute Führung des Arbeitsgeräts in Längsrichtung ermöglicht. Dadurch, dass das Arbeitsgerät nicht mit einer ebenen Fläche aufliegt, wird eine verbesserte Führung erreicht. Gleichzeitig ist die Auflage mit mindestens einer Führungsrippe verschmutzungsunempfindlich. Aufgrund der Anordnung der mindestens einen Führungsrippe höchstens in einem geringen Winkel von bis zu 10° zur Längsrichtung der Motorsäge wird erreicht, dass Verschmutzungen, die sich seitlich der mindestens einen Führungsrippe anlagern, bei der Bewegung des Arbeitsgeräts in Längsrichtung ausgeschoben werden. Dadurch wird ein Selbstreinigungseffekt des Arbeitsgeräts erreicht.

In besonders bevorzugter Ausführung weist jeder Teillängsabschnitt mit einer Länge von mindestens 1,5 cm, vorzugsweise jeder Teillängsabschnitt mit einer Länge von mindestens 1 cm zumindest einen Abschnitt einer Führungsrippe auf. Bevorzugt ist mindestens eine Führungsrippe, insbesondere mehrere Führungsrippen bis auf Stellen, an denen einzelne Gehäuseteile aneinander stoßen oder miteinander verbunden sind, unterbrechungsfrei ausgeführt. Besonders bevorzugt erstrecken sich in jedem Teillängsabschnitt des mittleren Längsabschnitts mit einer Länge von mindestens 2 cm mindestens zwei Führungsrippen. Besonders bevorzugt weisen die Führungsrippen in Richtung senkrecht zur Längsrichtung des Arbeitsgeräts einen Abstand zueinander auf, sind also bezogen auf die Längsrichtung nebeneinander angeordnet. Dadurch wird eine gute Abstützung des Arbeitsgeräts auf dem Untergrund erreicht.

Bevorzugt erstreckt sich der mittlere Längsabschnitt über mindestens 25%, insbesondere über mindestens 35%, vorzugsweise über mindestens 40% der Länge des Gehäuses.

In bevorzugter Gestaltung weist das Arbeitsgerät ein Griffrohr auf. Das Griffrohr dient zum Führen des Arbeitsgeräts im Betrieb. Bevorzugt übergreift das Griffrohr das Gehäuse des Arbeitsgeräts. In dem Gehäuse des Arbeitsgeräts ist vorteilhaft ein Antriebsmotor des Arbeitsgeräts angeordnet. Das Gehäuse kann dabei geschlossen oder teilweise offen ausgebildet sein. Vorteilhaft ist das Gehäuse durch mehrere Bauteile und Abdeckteile gebildet. Auch ein oder mehrere Handgriffe bilden dabei keine Teile des Gehäuses. Bauteile, die zur Befestigung des Werkzeugs dienen, wie beispielsweise ein Ausleger eines Trennschleifers, bilden keine Teile des Gehäuses.

Das Arbeitsgerät besitzt einen Griffrohrlängsabschnitt, in dem das Griffrohr mit einem ersten Ende nahe der Unterseite des Arbeitsgeräts festgelegt ist. Der Griffrohrlängsabschnitt ist vorzugsweise in einem Abstand von weniger als 15 cm, insbesondere in einem Abstand von weniger als 10 cm zu einer Vorderebene des Arbeitsgeräts angeordnet. Bevorzugt weist in dem Griffrohrlängsabschnitt jeder Teillängsabschnitt mit einer Länge von mindestens 2 cm zumindest einen Abschnitt einer Führungsrippe auf. Die mindestens eine Führungsrippe erstreckt sich vorteilhaft in dem Bereich unterhalb des ersten Endes des Griffrohrs. Bevorzugt ist das erste Ende des Griffrohrs mindestens teilweise, insbesondere vollständig von einem Gehäuseteil abgedeckt, das die mindestens eine Führungsrippe aufweist. Es kann alternativ oder ergänzend vorgesehen sein, dass das Griffrohr selbst mindestens eine Führungsrippe aufweist.

Das erste Ende des Griffrohrs verläuft vorteilhaft quer zur Längsrichtung des Arbeitsgeräts. Es hat sich gezeigt, dass beispielsweise beim Aufsetzen eines Arbeitsgeräts auf ein Werkstück, insbesondere beim Aufsetzen einer Motorsäge auf einen Baumstamm, das erste Ende des Griffrohrs die Bewegung des Arbeitsgeräts in Längsrichtung behindern kann. Dadurch, dass die mindestens eine Führungsrippe sich auch in dem Griffrohrlängsabschnitt erstreckt, wird eine gute Führung in diesem Bereich des Arbeitsgeräts ermöglicht. Der Griffrohrlängsabschnitt kann dabei teilweise oder vollständig in dem mittleren Längsabschnitt liegen. Es kann auch vorgesehen sein, dass der Griffrohrlängsabschnitt außerhalb des mittleren Längsabschnitts, insbesondere zwischen dem mittleren Längsabschnitt und der Vorderebene, liegt.

Das Arbeitsgerät weist eine gedachte Horizontalebene auf, die in Abstellposition parallel zur Abstellfläche und 1 cm oberhalb der Abstellfläche verläuft. Die Vorderebene des Arbeitsgeräts verläuft senkrecht zur Abstellfläche und senkrecht zur Längsrichtung und liegt an der Vorderseite an. Die Horizontalebene schneidet die mindestens eine Führungsrippe in einem Anlagepunkt. Der Anlagepunkt ist dabei der von der Horizontalebene geschnittene Punkt der mindestens einen Führungsrippe, der in Längsrichtung des Arbeitsgeräts den geringsten Abstand zur Vorderebene aufweist. Werden mehrere Führungsrippen von der Horizontalebene geschnitten, so ist der Anlagepunkt der von der Horizontalebene geschnittene Punkt einer Führungsrippe, der den geringsten Abstand zur Vorderebene aufweist. In bevorzugter Gestaltung ist der Abstand des Anlagepunkts zur Vorderebene vergleichsweise klein. Der Abstand des Anlagepunkts zur Vorderebene beträgt vorzugsweise weniger als 50% der Länge des Gehäuses des Arbeitsgeräts, insbesondere weniger als 20% der Länge des Gehäuses des Arbeitsgeräts, bevorzugt weniger als 10% der Länge des Gehäuses des Arbeitsgeräts.

Das Arbeitsgerät weist vorzugsweise einen vorderen Längsabschnitt auf, der sich zumindest von dem Anlagepunkt bis zum mittleren Längsabschnitt erstreckt. In dem vorderen Längsabschnitt weist jeder Teillängsabschnitt mit einer Länge von mindestens 2 cm vorzugsweise zumindest einen Abschnitt einer Führungsrippe auf. Bevorzugt erstrecken sich in dem mittleren Längsabschnitt und/oder in dem vorderen Längsabschnitt und/oder in dem Griffrohrlängsabschnitt mindestens zwei Führungsrippen in jedem Teillängsabschnitt mit einer Länge von mindestens 2 cm.

Der Anlagepunkt ist ein Punkt, in dessen Bereich das Arbeitsgerät beim Aufsetzen, beispielsweise beim Aufsetzen einer Motorsäge auf einen Baumstamm, in Kontakt mit dem Werkstück, beispielsweise dem Baumstamm, kommt. Dadurch, dass in diesem Bereich mindestens eine Führungsrippe angeordnet ist, wird bereits beim Aufsetzen des Arbeitsgeräts eine gute Führung erreicht und ein Verhaken oder Verkanten am Werkstück vermieden. Auch beim Schwenken des Arbeitsgeräts im Betrieb kann die mindestens eine Führungsrippe im vorderen Längsabschnitt eine gute Führung gewährleisten.

In dem vorderen Längsabschnitt verläuft die Unterseite des Arbeitsgeräts vorzugsweise konvex gebogen. Dadurch kann das Arbeitsgerät gut auf ein Werkstück aufgesetzt werden. Die konvex gebogene Form der Unterseite in dem vorderen Längsabschnitt unterstützt ein Aufschieben des Arbeitsgeräts auf ein Werkstück. Das Arbeitsgerät weist vorteilhaft einen vorderen Schwerpunkt auf, wobei der vordere Schwerpunkt hinter dem vorderen Längsabschnitt liegt. Unterschiedliche Lagen des Schwerpunkts ergeben sich bei handgeführten Arbeitsgeräten abhängig davon, ob ein Werkzeug montiert ist und je nach Art des montierten Werkzeugs, abhängig vom Füllstand mindestens eines Betriebsmitteltanks oder dgl. Der vordere Schwerpunkt ist die vorderste mögliche Lage des Schwerpunkts. Dadurch, dass der vordere Schwerpunkt nicht in dem konvex gebogenen vorderen Längsabschnitt verläuft, wird verhindert, dass das Arbeitsgerät beim Abstellen auf der Abstellfläche nach vorne kippt. In dem anschließenden mittleren Längsabschnitt verläuft die Unterseite des Arbeitsgeräts vorteilhaft gerade oder konkav gewölbt. Auch ein anderer, bevorzugt ein nicht konvex gewölbter Verlauf im mittleren Längsabschnitt kann vorteilhaft sein.

In bevorzugter Gestaltung sind mehrere Führungsrippen vorgesehen, wobei zwischen benachbarten Führungsrippen eine Nut gebildet ist. In besonders bevorzugter Gestaltung weist die Nut einen konkav gekrümmten Querschnitt auf. Die Querschnittsform der Nut ist vorzugsweise der Kontur eines Fingers eines Bedieners nachempfunden. So kann der Bediener in die Nut greifen und Verschmutzungen aus der Nut ausschieben. In besonders bevorzugter Gestaltung verringert sich die Höhe der Nut in mindestens einem Abschnitt der Führungsrippen mit zunehmendem Abstand von der Vorderebene. Dadurch kann der Bediener Verschmutzungen nach hinten ausschieben. Aufgrund der sich verringernden Höhe der Nut wird der Schmutz aus der Nut gefördert, wenn er nach hinten geschoben wird. In bevorzugter Gestaltung verringert sich der senkrecht zur Längsrichtung des Arbeitsgeräts gemessene Abstand der Stirnseiten benachbarter Führungsrippen in mindestens einem Abschnitt der Führungsrippen mit zunehmendem Abschnitt von der Vorderebene. Dadurch, dass der Abstand der Führungsrippen geringer wird, also die Nut zwischen den Führungsrippen schmaler wird, wird das Ausschieben von Verschmutzungen ebenfalls begünstigt. Bevorzugt ist die Kontur so gewählt, dass der Querschnitt der Nut sich zumindest in einem Längsabschnitt mit zunehmendem Abstand von der Vorderebene in Richtung auf die Stirnseiten der Führungsrippen verschiebt. Dabei ändert sich die Kontur der Nut vorzugsweise nicht, sondern verschiebt sich nur.

Vorzugsweise erstreckt sich die mindestens eine Nut über mindestens 20% der Länge des Gehäuses durchgehend und ohne Unterbrechung. In bevorzugter Gestaltung erstreckt sich die Nut über einen Großteil der Länge des Gehäuses durchgehend und ist lediglich durch Stoßkanten zwischen angrenzenden Bauteilen unterbrochen. Alle Unterbrechungsstellen erstrecken sich vorzugsweise über Teillängsabschnitte von weniger als 2 cm, insbesondere weniger als 1,5 cm, bevorzugt weniger als 1 cm Länge.

Ausführungsbeispiele der Erfindung werden im Folgenden anhand der Zeichnung erläutert. Es zeigen:
- Fig. 1: eine schematische Seitenansicht eines handgeführten Arbeitsgeräts,
- Fig. 2: eine perspektivische Darstellung auf die Unterseite des handgeführten Arbeitsgeräts aus Fig. 1, wobei das Griffrohr nicht dargestellt ist,
- Fig. 3: eine Seitenansicht des Griffgehäuses des handgeführten Arbeitsgeräts aus Fig. 1 und Fig. 2,
- Fig. 4: eine Ansicht auf die Unterseite des Griffgehäuses in Richtung des Pfeils IV in Fig. 3,
- Fig. 5: eine Ansicht auf einen Teil des Griffgehäuses in Blickrichtung des Pfeils IV in Fig. 3,
- Fig. 6: einen Schnitt entlang der Linie VI-VI in Fig. 5,
- Fig. 7: einen Schnitt entlang der Linie VII-VII in Fig. 5,
- Fig. 8: einen Schnitt entlang der Linie VIII-VIII in Fig. 5,
- Fig. 9 bis Fig. 13: schematische Schnittdarstellungen entsprechend der Darstellung in Fig. 8 für weitere Ausführungsbeispiele der Unterseite des Gehäuses,
- Fig. 14: ein Ausführungsbeispiel für ein handgeführtes Arbeitsgerät in Seitenansicht,
- Fig. 15: eine Ansicht auf die Unterseite eines Ausführungsbeispiels eines Griffgehäuses,
- Fig. 16 bis 19: schematische, ausschnittsweise Darstellungen von Ansichten auf Unterseiten von Griffgehäusen weiterer Ausführungsbeispiele, die mögliche Anordnungen von Führungsrippen zeigen.

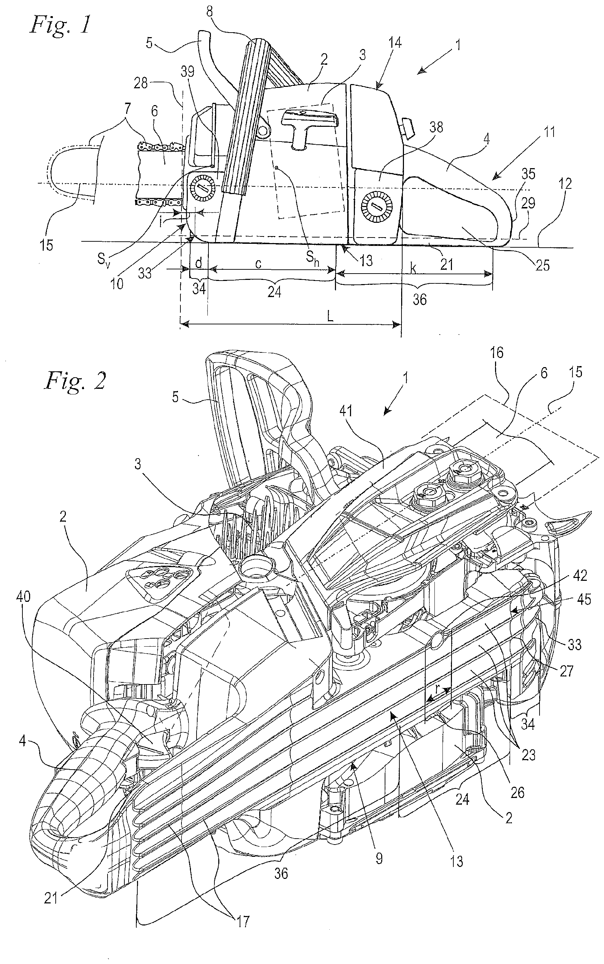

Fig. 1 zeigt als Ausführungsbeispiel für ein handgeführtes Arbeitsgerät 1 eine Motorsäge. Das handgeführte Arbeitsgerät 1 weist ein Gehäuse 2 auf, in dem ein Antriebsmotor 3 angeordnet ist. Am Gehäuse 2 ist ein hinterer Handgriff 4 festgelegt, vorzugsweise einteilig mit einem Teil des Gehäuses 2 ausgebildet. Der hintere Handgriff 4 bildet keinen Teil des Gehäuses 2. Anstatt des hinteren Handgriffs 4 kann auch ein oberer Handgriff vorgesehen sein, die Motorsäge also als Top-Handle-Säge ausgebildet sein. Der Antriebsmotor 3 treibt ein Werkzeug 7, nämlich eine Sägekette an. Das Werkzeug 7 ist an einer Führungsschiene 6 des Arbeitsgeräts 1 umlaufend angeordnet. Sowohl die Führungsschiene 6 als auch das Werkzeug 7 ragen an einer Vorderseite 10 des Gehäuses 2 vom Gehäuse 2 weg. Die Führungsschiene 6 und das Werkzeug 7 bilden keinen Teil des Gehäuses 2.

Im Ausführungsbeispiel ist der Antriebsmotor 3 ein Verbrennungsmotor, insbesondere ein Einzylindermotor, vorzugsweise ein Zweitaktmotor oder ein gemischgeschmierter Viertaktmotor. Der Antriebsmotor 3 wird mit Kraftstoff aus einem Kraftstofftank 38 versorgt. Es kann auch vorgesehen sein, dass der Antriebsmotor 3 ein Elektromotor ist. Anstatt des Kraftstofftanks 38 ist in diesem Fall vorzugsweise ein Akku zur Versorgung des Antriebsmotors 3 mit Energie vorgesehen. Alternativ kann das Arbeitsgerät 1 auch über ein Anschlusskabel mit Energie versorgt sein.

Das Arbeitsgerät 1 besitzt ein Griffrohr 8, das das Gehäuse 2 übergreift. An der der Führungsschiene 6 zugewandten Seite des Griffrohrs 8 erstreckt sich ein Handschutz 5. Der Handschutz 5 kann zum Auslösen einer nicht dargestellten Kettenbremse dienen. Es ist ein Schmiermitteltank 39 für Schmiermittel für das Werkzeug 7 vorgesehen. Im Ausführungsbeispiel ist der Schmiermitteltank 39 benachbart zur Vorderseite 10 angeordnet. Der Kraftstofftank 38 erstreckt sich nahe des hinteren Handgriffs 4. Der Kraftstofftank 38 und der Schmiermitteltank 39 bilden im Ausführungsbeispiel Teile des Gehäuses 2.

Fig. 1 zeigt das Arbeitsgerät 1 in einer Abstellposition 11, in der das Arbeitsgerät 1 auf einer ebenen, horizontalen Abstellfläche 12 abgestellt ist. Der hintere Handgriff 4 und das Griffrohr 8 können in dieser Position bequem von einem Bediener gegriffen werden. Das Arbeitsgerät 1 weist eine Längsrichtung 15 auf, die in der Ebene, in der sich das Werkzeug 7 im Betrieb bewegt, und parallel zur Abstellfläche 12 verläuft. Im Ausführungsbeispiel liegt die Längsrichtung 15 in der Führungsschiene 6 und verläuft parallel zur Führungsschiene 6 und zur Abstellfläche 12. Das Arbeitsgerät 1 weist eine Vorderebene 28 auf, die das Gehäuse 2 an der Vorderseite 10 berührt und die senkrecht zur Abstellfläche 12 verläuft. Die Vorderebene 28 verläuft demnach an der Vorderseite 10 tangential zum Gehäuse 2. Das Gehäuse 2 weist eine Länge L auf, die von der Vorderebene 28 bis zu der der Vorderebene 28 entfernt liegenden Rückseite 35 des Gehäuses 2 gemessen ist. Das Arbeitsgerät weist eine Unterseite 13 auf, die in Abstellposition 11 nahe der Abstellfläche 12 liegt, sowie eine Oberseite 14, die entfernt zur Abstellfläche 12 angeordnet ist.

Wie Fig. 2 zeigt, verläuft an der Unterseite 13 des Arbeitsgeräts 1 ein Führungssteg 9. Der Führungssteg 9 ist ein Tragteil, an dem eine Motorbaugruppe über nicht dargestellte Schwingungsdämpfungselemente fixiert ist. An der Unterseite 13, im Ausführungsbeispiel am Führungssteg 9, verlaufen eine Vielzahl von Führungsrippen 17. Im Ausführungsbeispiel sind vier Führungsrippen 17 vorgesehen, die sich über einen Großteil der Länge L (Fig. 1) erstrecken, und eine weitere Führungsrippe 17, die sich über einen Teil der Länge L erstreckt. Wie Fig. 2 zeigt, weist das Gehäuse 2 in dem in Abstellposition 11 unter dem hinteren Handgriff 4 angeordneten Längsabschnitt einen Trittabschnitt 21 auf, auf den ein Bediener seinen Fuß zum Fixieren des Arbeitsgeräts 1 beim Anwerfen des Antriebsmotors 3 stellen kann. Wie Fig. 1 auch zeigt, begrenzen der hintere Handgriff 4 und der Trittabschnitt 21 eine Grifföffnung 25. Wie Fig. 2 zeigt, verlaufen im Ausführungsbeispiel auch am Trittabschnitt 21 Führungsrippen 17. Zwischen benachbarten Führungsrippen 17 sind Nuten 23 gebildet.

In Fig. 2 ist auch die Ebene 16 der Führungsschiene 6 eingezeichnet. Die Ebene 16 der Führungsschiene 6 ist die mittig in der Führungsschiene 6 verlaufende Ebene, die das Werkzeug 7, im Ausführungsbeispiel die Sägekette in Längsrichtung schneidet. Die Längsrichtung 15 verläuft in der Ebene 16. Wie Fig. 2 auch zeigt, ist am Gehäuse 2 ein Kettenraddeckel 41 fixiert, der den Bereich eines nicht dargestellten Antriebsritzels für das Werkzeug 7 abdeckt. Am hinteren Handgriff 4 ist ein Bedienhebel 40, im Ausführungsbeispiel ein Gashebel schwenkbar gelagert. Der Bedienhebel 40 dient zur Ansteuerung des Antriebsmotors 3 (Fig. 1).

Wie die Fig. 1 und 2 zeigen, weist das Arbeitsgerät 1 mehrere Längsabschnitte 24, 34 und 36 auf.

Ein vorderer Längsabschnitt 34 erstreckt sich von einem Anlagepunkt 33 nach hinten. Parallel zur Abstellfläche 12 verläuft in einem Abstand von 1 cm oberhalb der Abstellfläche 12 eine Horizontalebene 29, die in Fig. 1 mit gestrichelter Linie eingezeichnet ist. Die Horizontalebene 29 schneidet die mindestens eine Führungsrippe 17 in einem Anlagepunkt 33. Der Anlagepunkt 33 ist dabei der Punkt einer Führungsrippe 17, der von der Horizontalebene 29 geschnitten ist und in Längsrichtung 15 des Arbeitsgeräts den geringsten in Längsrichtung 15 gemessenen Abstand i zur Vorderebene 28 aufweist. Der Anlagepunkt 33 ist demnach der Punkt aus der Menge aller von der Horizontalebene 29 geschnittenen Punkte aller Führungsrippen 17, der den geringsten Abstand zur Vorderebene 28 aufweist. Der Abstand i beträgt vorteilhaft weniger als 50% der Länge L, insbesondere weniger als 20% der Länge L, bevorzugt weniger als 10% der Länge L. Im vorderen Längsabschnitt 34 verläuft die Unterseite 13 im Ausführungsbeispiel konvex gebogen. Der vordere Längsabschnitt 34 erstreckt sich vorzugsweise über den gesamten in einem Schnitt in Längsrichtung 15 konvex gebogenen Bereich der Unterseite 13.

Ein mittlerer Längsabschnitt 24 erstreckt sich vom vorderen Längsabschnitt 34 in Richtung von der Vorderebene 28 weg, also in Richtung auf die Rückseite 35.

Der mittlere Längsabschnitt 24 erstreckt sich über eine Länge c, die in Längsrichtung 15 gemessen ist und die mindestens 15%, insbesondere mindestens 25% der Länge L des Gehäuses 2 beträgt. Vorteilhaft beträgt die Länge c mindestens 35%, bevorzugt mindestens 40% der Länge L des Gehäuses 2.

In Fig. 1 ist schematisch ein vorderer Schwerpunkt Sᵥ und ein hinterer Schwerpunkt Sₕ eingezeichnet. Der hintere Schwerpunkt Sₕ ergibt sich, wenn keine Schneidgarnitur, also keine Führungsschiene 6 und kein Werkzeug 7 am Arbeitsgerät 1 angeordnet sind und Schmiermitteltank 39 leer und Kraftstofftank 38 voll sind bzw. wenn keine Führungsschiene 6 und kein Werkzeug 7 am Arbeitsgerät 1 angeordnet sind und ein Akku im Arbeitsgerät 1 angeordnet ist. Ein vorderer Schwerpunkt Sᵥ ergibt sich, wenn Führungsschiene 6 und Werkzeug 7 am Gehäuse 2 angeordnet sind und der Schmiermitteltank 39 voll und der Kraftstofftank 28 leer sind bzw. wenn Führungsschiene 6 und Werkzeug 7 am Arbeitsgerät 1 angeordnet sind und kein Akku im Arbeitsgerät 1 angeordnet ist.

Der Schwerpunkt Sₕ liegt vorteilhaft in einem senkrecht zur Längsrichtung 15 des Arbeitsgeräts 1 verlaufenden Querschnitt, in dem mindestens eine Führungsrippe 17 angeordnet ist. Der Schwerpunkt Sₕ liegt vorteilhaft in dem mittleren Längsabschnitt 24. Der vordere Schwerpunkt Sᵥ kann sich ebenfalls in einem Querschnitt mit mindestens einer Führungsrippe 17 befinden. Vorteilhaft befindet sich der vordere Schwerpunkt Sᵥ im mittleren Längsabschnitt 24. Es kann jedoch auch vorgesehen sein, dass der vordere Schwerpunkt Sᵥ sich in geringem Abstand zum mittleren Längsabschnitt 24 zwischen dem mittleren Längsabschnitt 24 und der Vorderebene 28 befindet.

Das Arbeitsgerät 1 weist einen hinteren Längsabschnitt 36 auf, der sich vom mittleren Längsabschnitt 24 in Richtung auf eine Rückseite 35 des Gehäuses 2 erstreckt. Der hintere Längsabschnitt 36 erstreckt sich über eine Länge k, die vorteilhaft weniger als 70%, insbesondere weniger als 60% der Länge L beträgt. Die Länge k beträgt vorteilhaft mindestens 20%, insbesondere mindestens 30%, bevorzugt mindestens 40% der Länge L.

Wie Fig. 2 zeigt, verlaufen sowohl im vorderen Längsabschnitt 34 als auch im mittleren Längsabschnitt 24 und im hinteren Längsabschnitt 36 Führungsrippen 17. Der hintere Längsabschnitt 36 erstreckt sich im Ausführungsbeispiel über das Gehäuse 2 hinaus unter dem hinteren Handgriff 4.

Wie Fig. 2 zeigt, verlaufen die Führungsrippen 17 in den Längsabschnitten 24 und 36 durchgehend und sind nicht unterbrochen. In einem Verbindungsbereich 27 stoßen im Ausführungsbeispiel zwei Gehäuseteile aneinander, so dass in diesem Bereich ein geringfügiger Spalt 45 gebildet ist, der quer zu den Führungsrippen 17 durch die Führungsrippen 17 verläuft. Die in Längsrichtung 15 gemessene Länge des Spalts 45 beträgt vorteilhaft weniger als 2 cm, insbesondere weniger als 1,5 cm, bevorzugt weniger als 1 cm. Im Ausführungsbeispiel ist eine Breite des Spalts 45 von weniger als 3 mm vorgesehen. Auch die Nuten 23 erstrecken sich über den hinteren Längsabschnitt 36, den mittleren Längsabschnitt 24 und den vorderen Längsabschnitt 34 ohne Unterbrechungen, die 2 cm oder mehr in Längsrichtung 15 betragen. Jeder Teillängsabschnitt 26 mit einer Länge von mindestens 2 cm weist demnach mindestens eine Führungsrippe 17, im Ausführungsbeispiel vier Führungsrippen 17, auf. Der in Fig. 2 schematisch dargestellte Teillängsabschnitt 26 weist eine Länge r auf, die 2 cm beträgt. In diesem Teillängsabschnitt 26 ist eine Unterbrechung 42 einer der Führungsrippen 17 angeordnet. Die weiteren Führungsrippen 17 verlaufen in dem Teillängsabschnitt 26 ohne Unterbrechung. Auch die Unterbrechung 42 erstreckt sich nicht über den gesamten Teillängsabschnitt 26.

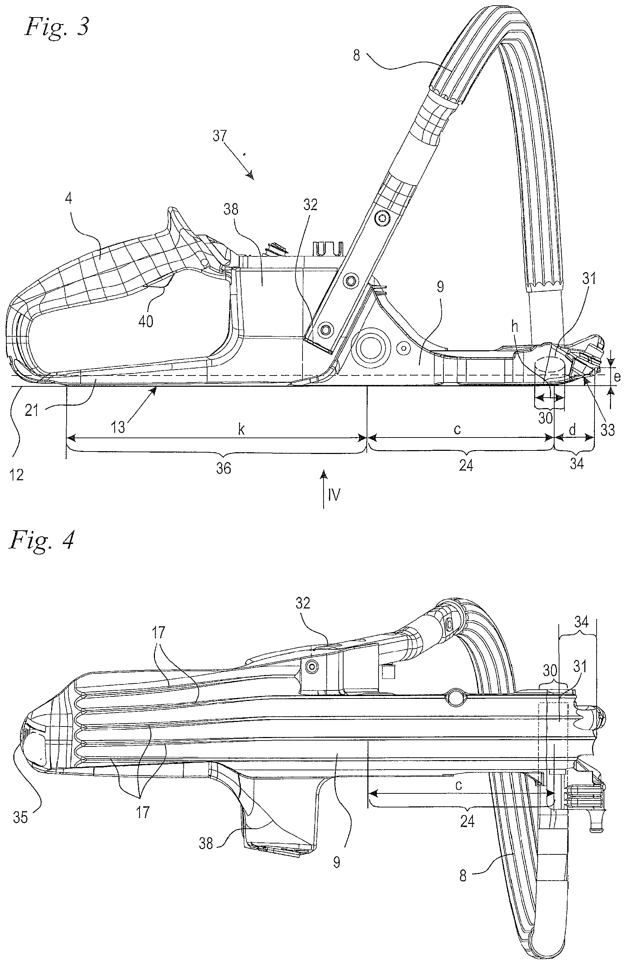

Die Fig. 3 und 4 zeigen ein Griffgehäuse 37 des Arbeitsgeräts 1, das einen Teil des Gehäuses 2 (Fig. 1) bildet. Das Griffgehäuse 37 bildet den hinteren Handgriff 4 und den Trittabschnitt 21 sowie Teile des Gehäuses 2, nämlich insbesondere den Kraftstofftank 38 und den Führungssteg 9. Auch weitere Teile des Arbeitsgeräts 1 können am Griffgehäuse 37 integral ausgebildet sein. Wie Fig. 3 und Fig. 4 zeigen, weist das Griffrohr 8 ein erstes Ende 31 und ein zweites Ende 32 auf. Am ersten Ende 31 ist das Griffrohr 8 benachbart zur Unterseite 13 des Arbeitsgeräts 1 und nahe der Vorderseite 10 (Fig. 1) am Griffgehäuse 37 festgelegt. Das erste Ende 31 des Griffrohrs 8 erstreckt sich in einem Griffrohrlängsabschnitt 30 des Arbeitsgeräts 1. Der Griffrohrlängsabschnitt 30 weist eine in Längsrichtung 15 gemessene Länge h auf, die mehr als 2 cm beträgt. Die Länge h beträgt vorteilhaft weniger als 20% der Länge L des Gehäuses 2 (Fig. 1). Im Griffrohrlängsabschnitt 30 weist jeder Teillängsabschnitt 26 (Fig. 2) mit einer Länge r von mindestens 2 cm mindestens einen Abschnitt einer Führungsrippe 17 auf.

Wie Fig. 4 zeigt, sind im Ausführungsbeispiel im Griffrohrlängsabschnitt 30 vier Führungsrippen 17 angeordnet. Der Griffrohrlängsabschnitt 30 kann sich dabei vorteilhaft im mittleren Längsabschnitt 24 und/oder im vorderen Längsabschnitt 34 erstrecken.

Die Führungsrippen 17 verlaufen im mittleren Längsabschnitt 24 parallel zueinander. Im hinteren Längsabschnitt 36 verlaufen die Führungsrippen 17 über einen Teil des hinteren Längsabschnitts 36, der an den mittleren Längsabschnitt 24 angrenzt, parallel zueinander. In dem daran anschließenden Bereich verringert sich der Abstand zwischen den Führungsrippen 17 in Richtung auf die Rückseite 35 kontinuierlich. Auch ein anderer Verlauf der Führungsrippen 17 kann vorteilhaft sein.

Wie Fig. 3 zeigt, liegt der Griffrohrlängsabschnitt 30 teilweise im mittleren Längsabschnitt 24 und teilweise im vorderen Längsabschnitt 34. Der vordere Längsabschnitt 34 erstreckt sich bis zum Ende der Führungsrippen 17. Wie Fig. 3 zeigt, weisen die Führungsrippen 17 an ihrem vorderen Ende einen Abstand e zur Abstellfläche 12 auf, der mehr als 1 cm, vorzugsweise mehr als 1,2 cm beträgt. Im vorderen Längsabschnitt 34 verläuft die Unterseite 13 in Blickrichtung senkrecht auf die Ebene 16 des Werkzeugs 6 (Fig. 2) konvex gebogen. Dadurch kann das Arbeitsgerät 1 mit der Unterseite 13 gut auf ein Werkstück aufgeschoben werden.

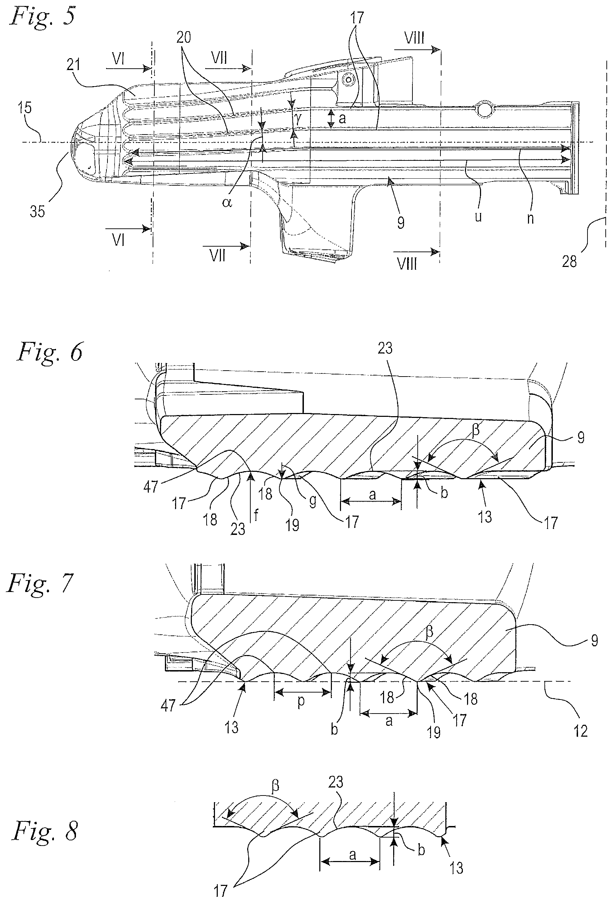

Wie Fig. 5 zeigt, schließen benachbarte Führungsrippen 17 einen Winkel γ ein. Der Winkel γ ist zwischen Längsrichtungen 20 der Führungsrippen 17 gemessen. Der Winkel γ beträgt zumindest in einem Teil des hinteren Längsabschnitts 36 vorteilhaft mehr als 2°, insbesondere mehr als 5°. Die Längsrichtung 20 einer Führungsrippe 17 schließt mit der Längsrichtung 15 des Arbeitsgeräts 1 einen Winkel α ein, der weniger als 10° beträgt. Der Winkel α beträgt vorteilhaft weniger als 5°. Die Führungsrippen 17 verlaufen demnach näherungsweise in Längsrichtung 15. Benachbarte Führungsrippen 17 weisen einen Abstand a zueinander auf. Der Abstand a verringert sich im hinteren Längsabschnitt 36 in Richtung auf die Rückseite 35 des Arbeitsgeräts 1. In diesem Bereich verlaufen benachbarte Führungsrippen 17 in einem Winkel α von mehr als 0° zueinander. Im Ausführungsbeispiel ist eine kontinuierliche Verringerung des Abstands a vorgesehen. Alternativ kann insbesondere ein paralleler Verlauf der Führungsrippen 17 zueinander vorteilhaft sein.

Die Fig. 6 bis 8 zeigen die Gestaltung der Führungsrippen 17 im Einzelnen. Benachbarte Führungsrippen 17 weisen den Abstand a zueinander auf. Zwischen benachbarten Führungsrippen 17 ist jeweils eine Nut 23 gebildet. Jede Nut 23 weist einen Boden 47 auf, der Seitenwände 18 benachbarter Führungsrippen 17 verbindet. Die Seitenwände 18 gehen dabei übergangslos in den Boden 47 über. Die vom Boden 47 einer Nut 23 bis zur Stirnseite 19 der benachbarten Führungsrippen 17 gemessene Höhe b der Nut 23 verringert sich in Richtung auf die Rückseite 35. Zur Rückseite 35 hin sind die Nuten 23 vorteilhaft offen, so dass Verschmutzungen vom Bediener nach hinten aus den Nuten 23 ausgeschoben werden können. In Fig. 6, die den am nächsten zur Rückseite 35 liegenden Schnitt zeigt, ist eine vergleichsweise geringe Höhe b vorgesehen. Die Höhe b ist vorteilhaft kleiner als der Abstand a, insbesondere kleiner als das 0,5fache des Abstands a. In alternativer Ausführung kann die mindestens eine Nut 23 auch eine konstante Höhe über ihre Länge u aufweisen.

Die Führungsrippen 17 sind als längliche, schmale Erhebungen ausgebildet. Die Führungsrippen 17 weisen eine in Längsrichtung 20 der Führungsrippen 17 gemessene Länge n auf (Fig. 5). Jede Führungsrippe 17 weist eine in Fig. 7 eingezeichnete, parallel zur Abstellfläche und senkrecht zur Längsrichtung 15 (Fig. 5) gemessene Breite p auf. Da die Seitenwände 18 übergangslos in die Nut 23 übergehen, ist die Breite p zwischen den in Abstellposition 12 in der dargestellten Schnittebene senkrecht zur Längsrichtung 15 am weitesten oben liegenden Punkten benachbarter Nuten 23 gemessen. Die Länge n beträgt deutlich mehr, insbesondere mehr als das 2fache, vorzugsweise mehr als das 5fache der Breite p.

Der Boden 47 mindestens einer Nut 23, insbesondere aller Nuten 23 verläuft vorteilhaft über mindestens 90% seiner Länge frei von Höhensprüngen. Ein Abschnitt mit einem Höhensprung ist dabei ein Längsabschnitt, in dem sich die Höhe b der Nut 23 um mindestens 10% der Länge dieses Längsabschnitts ändert. Die Summe der Länge dieser Längsabschnitte mit Höhensprung beträgt vorteilhaft weniger als 10% der Länge u der Nut 23 (Fig. 5). Dadurch ist die Anlagerung von Verschmutzungen innerhalb der Nuten 23 reduziert und die Reinigung der Nuten 23, insbesondere nur mit einem Finger des Benutzers, ist vereinfacht.

Wie Fig. 6 und Fig. 7 zeigen, weist jede Führungsrippe 17 zwei Seitenwände 18 auf, zwischen denen die Stirnseite 19 der Führungsrippe 17 verläuft. Die Nut 23 geht im Ausführungsbeispiel in die Seitenwände 18 über. Im Ausführungsbeispiel weist die Nut 23 im Schnitt senkrecht zur Längsrichtung 15 einen durchgehenden Radius f auf. Auch ein anderer, insbesondere ein anderer gebogener Verlauf der Nut 23 im Querschnitt kann jedoch vorteilhaft sein. In vorteilhafter Ausführung weist die Nut 23 einen mindestens teilweise elliptischen Querschnitt auf. Die Stirnseite 19 verläuft in einem Radius g.

Der Radius g ist kleiner als der Radius f, insbesondere kleiner als das 0,5fache des Radius f, bevorzugt kleiner als das 0,25fache des Radius f. Die Nut 23 ist konkav ausgebildet. Die Stirnseite 19 ist im Ausführungsbeispiel konvex ausgebildet. Dadurch weisen die Führungsrippen 17 keine scharfen Kanten auf, die sich beim Schieben des Arbeitsgeräts 1 quer zur Längsrichtung 15 am Werkstück, beispielsweise an der Rinde eines Stamms, verhaken könnten. Auch ein anderer Verlauf der Stirnseite 19 kann vorteilhaft sein.

Wie Fig. 7 zeigt, schließen die Stirnseiten 18 einer Führungsrippe 17 einen Winkel β ein, der mehr als 10° beträgt. Vorzugsweise ist der Winkel β größer als 30°. Im Ausführungsbeispiel ist ein Winkel β von mehr als 45°, insbesondere von mehr als 60° vorgesehen. Die Nuten 23 erstrecken sich über mindestens 20%, insbesondere mindestens 50%, vorzugsweise über mindestens 70% der Länge L des Gehäuses 2 durchgehend und ohne Unterbrechung. Vorteilhaft sind die Nuten 23 über ihre Länge nicht oder nur durch quer verlaufende Vertiefungen vergleichsweise geringer Breite, vorzugsweise einer Breite von weniger als 1 cm, unterbrochen.

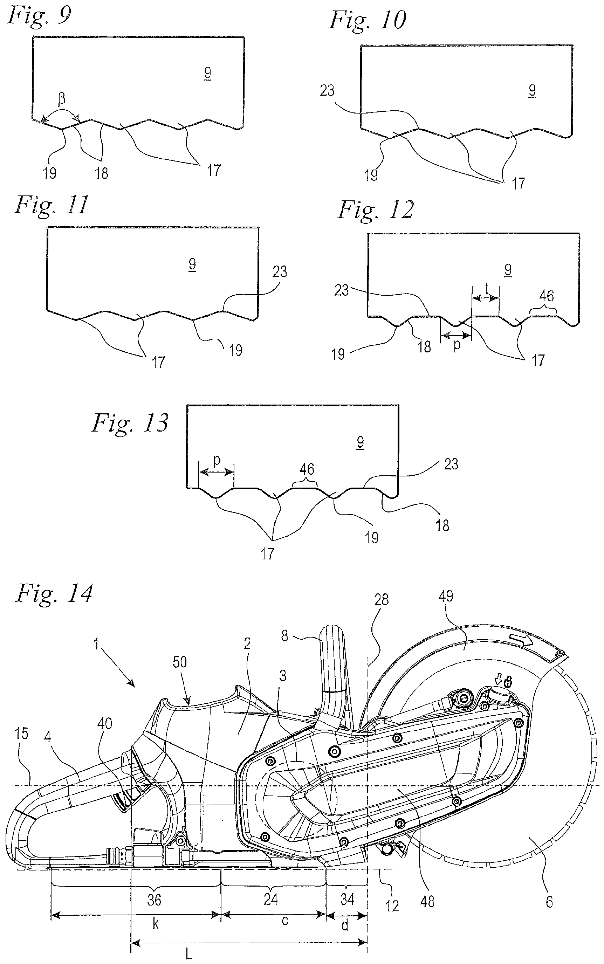

Die Fig. 9 bis 13 zeigen unterschiedliche Ausführungsbeispiele für Querschnitte von Führungsrippen 17. Dabei kann vorgesehen sein, dass mindestens eine Führungsrippe 17 in unterschiedlichen Längenabschnitten Querschnitte mit unterschiedlicher Form aufweist. Alternativ oder zusätzlich kann vorgesehen sein, dass das Arbeitsgerät 1 Führungsrippen 17 aufweist, deren Querschnitte sich voneinander unterscheiden. Damit kann der Querschnitt der Führungsrippen 17 an deren Funktion angepasst werden.

Fig. 9 zeigt Führungsrippen 17, deren Seitenwände 18 in einem Querschnitt senkrecht zur Längsrichtung 15 gerade verlaufen. Die Stirnseiten 19 der Führungsrippen 17 sind konvex mit einem kleinen Radius ausgebildet. Der Winkel β, den die Seitenwände 18 einer Führungsrippe 17 einschließen, ist vergleichsweise groß. Der Winkel β beträgt im Ausführungsbeispiel mehr als 45°, insbesondere mehr als 60°.

Beim Ausführungsbeispiel nach Fig. 10 sind Führungsrippen 17 vorgesehen, bei denen sowohl die Nuten 23 am Nutgrund als auch die Stirnseiten 19 abgerundet ausgebildet sind. Die Seitenwände 18 verlaufen zwischen der Stirnseite 19 und dem Nutgrund der Nut 23 gerade.

Beim Ausführungsbeispiel nach Fig. 11 sind die Nuten 23 am Nutgrund konkav gerundet ausgeführt. Die Stirnseiten 19 der Führungsrippen 17 sind spitz und ohne Abrundung ausgeführt.

Beim Ausführungsbeispiel nach Fig. 12 ist zwischen benachbarten Führungsrippen 17 jeweils ein Bereich 46 angeordnet, in dem die Unterseite 13 in Abstellposition 11 in einem Schnitt senkrecht zur Längsrichtung 15 parallel zur Abstellfläche 12 verläuft. Die Breite p der Führungsrippen 17 ist zwischen benachbarten Bereichen 46 gemessen. Dadurch weisen benachbarte Führungsrippen 17 einen Abstand t zueinander auf. Die Seitenwände 18 der Führungsrippen 17 gehen mit einer konkaven Wölbung in den Nutgrund der Nuten 23 über. Die Stirnseiten 19 sind konvex abgerundet.

Im Ausführungsbeispiel nach Fig. 13 sind wie in Fig. 12 Führungsrippen 17 mit Abstand zueinander angeordnet. Die Seitenwände 18 der Führungsrippen verlaufen im Schnitt senkrecht zur Längsrichtung 15 konkav gewölbt. Die Seitenwände 18 gehen mit einem Radius in den zwischen benachbarten Führungsrippen gebildeten Bereich 46 über. Die Breite p der Führungsrippen 17 ist zwischen benachbarten Bereichen 46 gemessen.

Fig. 14 zeigt ein alternatives Ausführungsbeispiel für ein handgeführtes Arbeitsgerät 1, nämlich einen Trennschleifer. Das Arbeitsgerät 1 nach Fig. 14 weist einen schematisch dargestellten Antriebsmotor 3 auf, der als Elektromotor ausgeführt ist. Zur Versorgung des Antriebsmotors 3 mit Energie ist ein nicht dargestellter Akku vorgesehen, der in einer Akkuaufnahme 50 anzuordnen ist. Am Gehäuse 2 ist ein Ausleger 48 angeordnet, der vorliegend nicht als Teil des Gehäuses 2 betrachtet wird. Am freien Ende des Auslegers 48 ist ein Werkzeug 6, nämlich eine Trennscheibe drehbar gelagert. Ein Teil der Trennscheibe ist von einer Schutzhaube 49 abgedeckt. Die Vorderebene 28 schneidet den Ausleger 48 und verläuft an der dem Werkzeug 6 zugewandten Seite des Gehäuses 2. In Fig. 14 sind die Längsabschnitte 24, 34 und 36 des Arbeitsgeräts 1 eingezeichnet. Im vorderen Längsabschnitt 34 verläuft die Unterseite 13 des Arbeitsgeräts 1, in der die in Fig. 14 nicht dargestellten Führungsrippen 17 verlaufen, eben, aber zur Abstellfläche 12 geneigt. Im Ausführungsbeispiel nach Fig. 1 bis 8 verläuft die Unterseite 13 im vorderen Längsabschnitt 34 konvex von der Abstellfläche 12 weg gebogen.

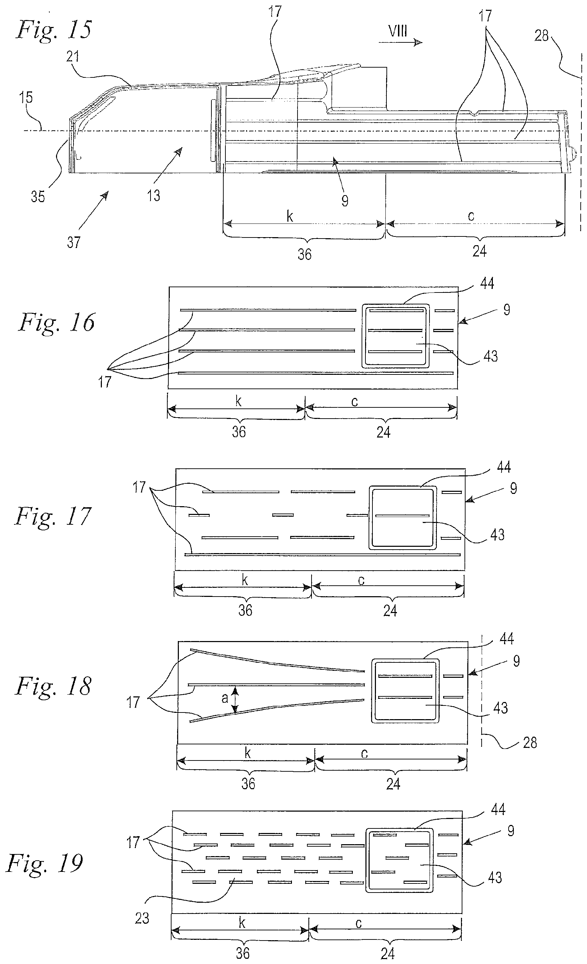

Die Fig. 15 bis 19 zeigen alternative Ausführungen für die Gestaltung der Unterseite 13 des Griffgehäuses 37. Beim Ausführungsbeispiel nach Fig. 15 erstrecken sich drei Führungsrippen 17 im mittleren Längsabschnitt 24. Der hintere Längsabschnitt 36 erstreckt sich vom mittleren Längsabschnitt 24 bis zu dem der Rückseite 35 abgewandten, der Vorderebene 28 näherliegenden Seite des Trittabschnitts 21. Der hintere Längsabschnitt 36 weist damit eine Länge k auf, die kleiner als beim Ausführungsbeispiel nach Fig. 1 ist. Im hinteren Längsabschnitt 36 ist ein Teil einer vierten Führungsrippe 17 angeordnet.

Die Fig. 16 bis 19 zeigen weitere Ausführungsbeispiele für mögliche Anordnungen von Führungsrippen 17 an der Unterseite 13 eines Arbeitsgeräts 1, wobei der vordere Längsabschnitt 34 jeweils nicht dargestellt ist. Bei allen Ausführungsbeispielen nach Fig. 16 bis Fig. 19 ist ein Deckel 43 an der Unterseite 13 angeordnet, der insbesondere die Befestigung des ersten Endes 31 des Griffrohrs 8 (Fig. 4) abdeckt. Die gezeigten Anordnungen von Führungsrippen 17 können auch bei Ausführungen ohne Deckel 43 vorteilhaft sein. Der Deckel 43 kann beispielsweise durch Schweißen, insbesondere durch Reibschweißen befestigt sein. Am Rand 44 des Deckels 43 sind keine Führungsrippen 17 vorgesehen.

Beim Ausführungsbeispiel nach Fig. 16 sind die Führungsrippen 17 im Bereich des Rands 44 des Deckels 43 unterbrochen. Ansonsten verlaufen die Führungsrippen 17 unterbrechungsfrei über den mittleren Längsabschnitt 24 und den hinteren Längsabschnitt 36. Der vordere Längsabschnitt ist nicht dargestellt.

Im Ausführungsbeispiel nach Fig. 17 sind eine Vielzahl von Führungsrippen 17 unterschiedlicher Länge dargestellt, die versetzt zueinander verlaufen. In Teillängsabschnitten, in denen eine oder mehrere Führungsrippen 17 unterbrochen sind, verläuft im gleichen Teillängsabschnitt eine andere Führungsrippe 17. Im Ausführungsbeispiel verläuft eine Führungsrippe 17 näherungsweise über die gesamte Länge k des hinteren Längsabschnitts 36 sowie über die näherungsweise gesamte Länge c des mittleren Längsabschnitts 24. Die weiteren Führungsrippen 17 sind teilweise unterbrochen. Mit Ausnahme des Bereichs des Rands 44 des Deckels 43 sind in jedem Längsabschnitt mindestens zwei Führungsrippen 17 vorgesehen.

Beim Ausführungsbeispiel nach Fig. 18 sind Führungsrippen 17 vorgesehen, die gekrümmt zueinander verlaufen. Dadurch verändert sich der Abstand a zwischen benachbarten Führungsrippen mit zunehmendem Abstand von der Vorderebene 28. Im Ausführungsbeispiel nach Fig. 18 vergrößert sich der Abstand a mit zunehmendem Abstand von der Vorderebene 28.

Beim Ausführungsbeispiel nach Fig. 19 sind eine Vielzahl von Führungsrippen 17 vorgesehen, deren Längserstreckung vergleichsweise klein ist. Die Führungsrippen 17 sind in Längsrichtung 15 zueinander versetzt angeordnet, so dass mit Ausnahme des Bereichs des Rands 44 in jedem Teillängsabschnitt mindestens eine, vorzugsweise mindestens zwei Führungsrippen 17 angeordnet sind. Die zwischen benachbarten Führungsrippen 17 ausgebildeten Nuten 23 sind dadurch beim Ausführungsbeispiel nach Fig. 19 vielfach unterbrochen.

Weitere vorteilhafte Ausführungsbeispiele ergeben sich durch beliebige Kombination der beschriebenen und dargestellten Ausführungen.

## Patentansprüche

1. Handgeführtes Arbeitsgerät mit einem Werkzeug (7), wobei das Arbeitsgerät (1) eine Abstellposition (11) aufweist, in der das Arbeitsgerät (1) auf einer ebenen, horizontalen Abstellfläche (12) abgestellt ist, wobei das Arbeitsgerät (1) eine in Abstellposition (11) unten liegende Unterseite (13) und eine in Abstellposition (11) oben abgeordnete Oberseite (14) aufweist, wobei das Arbeitsgerät (1) eine Längsrichtung (15) aufweist, die parallel zur Ebene (16) des Werkzeugs (7) und in Abstellposition (11) parallel zur Abstellfläche (12) verläuft, wobei das Arbeitsgerät (1) ein Gehäuse (2) aufweist, wobei das Werkzeug (7) mindestens teilweise außerhalb des Gehäuses (2) verläuft, wobei das Arbeitsgerät (1) mindestens eine an der Unterseite (13) des Arbeitsgeräts (1) verlaufende Führungsrippe (17) aufweist, wobei die Längsrichtung (20) der Führungsrippe (17) mit der Längsrichtung (15) des Arbeitsgeräts (1) einen Winkel (a) von weniger als 10° einschließt,
**dadurch gekennzeichnet, dass** die Führungsrippe (17) zwei Seitenwände (18) aufweist, zwischen denen eine Stirnseite (19) der Führungsrippe (17) verläuft, und dass die Seitenwände (18) in mindestens einem Abschnitt in einem Winkel (β) zueinander geneigt verlaufen, der in einer Schnittebene senkrecht zur Längsrichtung (15) des Arbeitsgeräts (1) mindestens 10° beträgt.

2. Arbeitsgerät nach Anspruch 1,
**dadurch gekennzeichnet, dass** der Winkel (β) mindestens 30° beträgt.

3. Arbeitsgerät nach Anspruch 1 oder 2,
**dadurch gekennzeichnet, dass** die Stirnseite (19) der Führungsrippe (17) in einer Schnittebene senkrecht zur Längsrichtung (15) des Arbeitsgeräts (1) konvex gerundet verläuft.

4. Arbeitsgerät nach einem der Ansprüche 1 bis 3,
**dadurch gekennzeichnet, dass** mindestens eine Seitenwand (18) der Führungsrippe (17) zumindest in einem Abschnitt konkav gekrümmt verläuft.

5. Arbeitsgerät nach einem der Ansprüche 1 bis 4,
**dadurch gekennzeichnet, dass** das Gehäuse (2) eine in Längsrichtung (15) gemessene Länge (L) aufweist, wobei das Werkzeug (7) mindestens teilweise außerhalb des Gehäuses (2) verläuft, wobei das Gehäuse (2) eine dem Werkzeug (7) zugewandt liegende Vorderseite (10) aufweist, wobei das Arbeitsgerät (1) einen mittleren Längsabschnitt (24) aufweist, der sich über mindestens 15% der Länge (L) des Gehäuses (2) erstreckt und in dem jeder Teillängsabschnitt (26) mit einer Länge (r) von mindestens 2 cm zumindest einen Abschnitt einer Führungsrippe (17) aufweist.

6. Arbeitsgerät nach Anspruch 5,
**dadurch gekennzeichnet, dass** der mittlere Längsabschnitt (24) sich über mindestens 25% der Länge (L) des Gehäuses (2) erstreckt.

7. Arbeitsgerät nach Anspruch 5 oder 6,
**dadurch gekennzeichnet, dass** das Arbeitsgerät (1) ein Griffrohr (8) aufweist, das in einem Griffrohrlängsabschnitt (30) des Arbeitsgeräts (1) mit einem ersten Ende (31) nahe der Unterseite (13) des Arbeitsgeräts (1) festgelegt ist und dass in dem Griffrohrlängsabschnitt (30) jeder Teillängsabschnitt (26) mit einer Länge (r) von mindestens 2 cm zumindest einen Abschnitt einer Führungsrippe (17) aufweist.

8. Arbeitsgerät nach einem der Ansprüche 1 bis 3,
**dadurch gekennzeichnet, dass** das Arbeitsgerät (1) eine gedachte Horizontalebene (29) aufweist, die in Abstellposition (11) parallel zur Abstellfläche (12) und 1 cm oberhalb der Abstellfläche (12) verläuft, wobei das Arbeitsgerät (1) eine Vorderebene (28) aufweist, die senkrecht zur Abstellfläche (12) und senkrecht zur Längsrichtung (15) verläuft und die an der Vorderseite (10) anliegt, wobei die Horizontalebene (29) die mindestens eine Führungsrippe (17) in einem Anlagepunkt (33) schneidet, wobei der Anlagepunkt (33) der von der Horizontalebene (29) geschnittene Punkt der mindestens einen Führungsrippe (17) ist, der in Längsrichtung (15) des Arbeitsgeräts (1) den geringsten Abstand (i) zur Vorderebene (28) aufweist, wobei das Arbeitsgerät (1) einen vorderen Längsabschnitt (34) aufweist, der sich zumindest von dem Anlagepunkt (33) bis zum mittleren Längsabschnitt (24) erstreckt und in dem jeder Teillängsabschnitt (26) mit einer Länge (r) von mindestens 2 cm zumindest einen Abschnitt einer Führungsrippe (17) aufweist.

9. Arbeitsgerät nach Anspruch 8,
**dadurch gekennzeichnet, dass** die Unterseite (13) des Arbeitsgeräts (1) in dem vorderen Längsabschnitt (34) konvex gebogen verläuft.

10. Arbeitsgerät nach Anspruch 9,
**dadurch gekennzeichnet, dass** das Arbeitsgerät (1) einen vorderen Schwerpunkt (Sᵥ) aufweist, der hinter dem vorderen Längsabschnitt (34) liegt.

11. Arbeitsgerät nach einem der Ansprüche 1 bis 10,
**dadurch gekennzeichnet, dass** das Arbeitsgerät (1) mehrere Führungsrippen (17) aufweist und dass zwischen benachbarten Führungsrippen (17) eine Nut (23) gebildet ist.

12. Arbeitsgerät nach Anspruch 11,
**dadurch gekennzeichnet, dass** die Nut (23) einen konkav gekrümmten Querschnitt aufweist.

13. Arbeitsgerät nach Anspruch 11 oder 12,
**dadurch gekennzeichnet, dass** sich die Höhe (b) der Nut (23) in mindestens einem Abschnitt der Führungsrippen (17) mit zunehmendem Abstand von der Vorderebene (28) verringert.

14. Arbeitsgerät nach einem der Ansprüche 11 bis 13,
**dadurch gekennzeichnet, dass** sich der senkrecht zur Längsrichtung (15) des Arbeitsgeräts (1) gemessene Abstand (a) der Stirnseiten (19) benachbarter Führungsrippen (17) in mindestens einem Abschnitt der Führungsrippen (17) mit zunehmendem Abstand von der Vorderebene (28) verringert.

15. Arbeitsgerät nach einem der Ansprüche 11 bis 14,
**dadurch gekennzeichnet, dass** die Nut (23) über mindestens 20% der Länge (L) des Gehäuses (2) durchgehend und ohne Unterbrechung ausgebildet ist.
